# EUROPEAN PATENT APPLICATION

(11) **EP 4 644 127 A1**
(43) Date of publication of application: **05.11.2025**
(21) Application number: 23911544.7
(22) Date of filing: 01.12.2023
(51) Int. Cl.: B41J 3/36, B41J 29/38, B65C 9/46, G06K 7/10, G06K 17/00

(54) **PRINTER, PRINTER CONTROL METHOD, AND PROGRAM**

(30) Priority: 26.12.2022 JP 2022208605
(71) Applicant: SATO Corporation, Tokyo 108-0023 (JP)
(72) Inventor: KIRITA, Koji, Tokyo 108-0023 (JP)
(74) Representative: Grünecker Patent- und Rechtsanwälte PartG mbB
(86) International application number: PCT/JP2023/043176
(87) International publication number: WO 2024/142763

(57) **Abstract**

A printer that performs, based on print data, printing on a label continuous body provided with a plurality of labels each having an RFID inlay, the printer includes: a data generation unit configured to generate RFID data and drawing data from the print data; an RFID control unit configured to receive the RFID data generated by the data generation unit and write the received RFID data to the RFID inlay; and a print control unit configured to receive the drawing data generated by the data generation unit and print the received drawing data on the label, wherein the RFID control unit writes the RFID data to the RFID inlay in parallel with the print control unit receiving the drawing data transmitted from the data generation unit.

## Description

### TECHNICAL FIELD

The present invention relates to a printer, a printer control method, and a program.

### BACKGROUND ART

JP2013-000953A discloses a printer that performs printing on a label continuous body in which label pieces having an RFID inlay are continuously and temporarily attached and that writes data to the RFID inlay.

### SUMMARY OF INVENTION

In a printer that performs printing and writes data in an RFID inlay, it is required to improve a label issuing speed.

The present invention has been made in view of such a technical problem, and an object of thereof is to improve the label issuing speed.

According to one aspect of the present invention, a printer that performs, based on print data, printing on a label continuous body provided with a plurality of labels each having an RFID inlay, the printer includes: a data generation unit configured to generate RFID data and drawing data from the print data; an RFID control unit configured to receive the RFID data generated by the data generation unit and write the received RFID data to the RFID inlay; and a print control unit configured to receive the drawing data generated by the data generation unit and print the received drawing data on the label, wherein the RFID control unit writes the RFID data to the RFID inlay in parallel with the print control unit receiving the drawing data transmitted from the data generation unit.

According to the above aspect, since the RFID control unit writes the RFID data to the RFID inlay in parallel with the print control unit receiving the drawing data, the writing of the RFID data is performed without waiting for a process for receiving the drawing data in the print control unit. Therefore, since the RFID data is written to an RFID inlay of a leading label when a print start command is received, a timing at which the printing is completed is earlier as compared with a case in which the writing of the RFID data is performed after the drawing data is received, and the label issuing speed can be improved.

### BRIEF DESCRIPTION OF DRAWINGS

[FIG. 1] FIG. 1 is a perspective view of a printer according to an embodiment of the present invention.
[FIG. 2] FIG. 2 is a front view of the printer from which a print unit cover is removed.
[FIG. 3] FIG. 3 is a functional block diagram of a control unit.
[FIG. 4] FIG. 4 is a flowchart of a label issuing process.
[FIG. 5] FIG. 5 is a flowchart of the label issuing process.
[FIG. 6] FIG. 6 is a time chart of the label issuing process.
[FIG. 7] FIG. 7 is a diagram illustrating an operation of the printer in the label issuing process.

### DESCRIPTION OF EMBODIMENTS

Embodiments described below are not limited to the drawings which are illustrated by the brief description of the drawings.

A first aspect of the present invention provides a printer that performs, based on print data, printing on a label continuous body provided with a plurality of labels each having an RFID inlay, the printer including: a data generation unit configured to generate RFID data and drawing data from the print data; an RFID control unit configured to receive the RFID data generated by the data generation unit and write the received RFID data to the RFID inlay; and a print control unit configured to receive the drawing data generated by the data generation unit and print the received drawing data on the label, in which the RFID control unit writes the RFID data to the RFID inlay in parallel with the print control unit receiving the drawing data transmitted from the data generation unit.

According to the first aspect of the present invention, since the RFID control unit writes the RFID data to the RFID inlay in parallel with the print control unit receiving the drawing data, the writing of the RFID data is performed without waiting for a process required for receiving the drawing data in the print control unit. Therefore, since the RFID data is written to an RFID inlay of a leading label when a print start command is received, a timing at which the printing is completed is earlier as compared with a case in which the writing of the RFID data is performed after the drawing data is received, and a label issuing speed can be improved.

A second aspect of the present invention provides the printer according to the first aspect, in which the print control unit performs printing on the label after the RFID control unit ends writing to the RFID inlay.

According to the second aspect of the present invention, the print control unit can quickly perform printing on the label by acquiring the print start command after the writing to the RFID inlay is ended, and the label issuing speed can be improved.

A third aspect of the present invention provides the printer according to the first or second aspect, in which the data generation unit further generates control data from the print data, and the RFID control unit writes the RFID data to the RFID inlay after the print control unit receives the control data transmitted from the data generation unit.

According to the third aspect of the present invention, when the print control unit prepares for printing based on the received control data, the RFID control unit writes the RFID data to the RFID inlay, and thus the label issuing speed can be improved.

A fourth aspect of the present invention provides the printer according to any one of the first to third aspects, in which the RFID control unit performs writing to the RFID inlay when a leading label of the label continuous body is at a print start position.

According to the fourth aspect of the present invention, since the RFID data can be written to the RFID inlay when the leading label is at the print start position, there is no need to perform forward feed and backfeed to write the RFID data.

A fifth aspect of the present invention provides the printer according to any one of the first to fourth aspects, further including: a first processor and a second processor communicably connected to each other, in which the first processor constitutes the data generation unit, and the second processor constitutes the RFID control unit and the print control unit.

According to the fifth aspect of the present invention, in the configuration in which the data generation unit, the RFID control unit, and the print control unit are implemented by the first processor and the second processor that are different from each other, the label issuing speed can be improved.

More specifically, transfer of the drawing data from the data generation unit to the print control unit requires a longer time than a case in which the data generation unit and the print control unit are implemented by a single processor. In such a configuration, when the RFID control unit performs writing of the RFID data after the transfer of the drawing data from the data generation unit to the print control unit is completed, the slower a transfer speed of the data from the data generation unit to the print control unit, the greater a ratio of a data transfer time to a time required for issuing the label. Therefore, by starting the writing of the RFID data without waiting for the completion of acquisition of the drawing data, the time required for issuing the label can be shortened by a time required for transferring the drawing data. That is, the slower the data transfer speed from the data generation unit to the print control unit, the greater a ratio of the time required for issuing the label that can be shortened. Therefore, it can be said that in the case in which the first processor constitutes the data generation unit and the second processor constitutes the print control unit, the effect of improving the label issuing speed is greater than that in the case in which the data generation unit and the print control unit are implemented by a single processor.

A sixth aspect of the present invention provides the printer according to any one of the first to fifth aspects, further including: a backfeed control unit configured to backfeed the label continuous body and move a leading label to a print start position, in which the backfeed control unit performs backfeed after the printed label is issued.

According to the sixth aspect of the present invention, by performing the backfeed after the printing is completed, preparation for printing on the next label and writing to the RFID inlay can be immediately performed.

A seventh aspect of the present invention provides a control method to be executed by a computer in a printer, the printer performing, based on print data, printing on a label continuous body provided with a plurality of labels each having an RFID inlay, the control method including: a step of generating RFID data and drawing data from the print data; a step of writing the RFID data to the RFID inlay in parallel with receiving the generated drawing data; and a step of printing the received drawing data on the label.

According to the seventh aspect of the present invention, since the RFID data is written to the RFID inlay in parallel with receiving the generated drawing data, the writing of the RFID data is performed without waiting for a process required for receiving the drawing data. Therefore, since the RFID data is written to an RFID inlay of a leading label when a print start command is received, a timing at which the printing is completed is earlier as compared with a case in which the writing of the RFID data is performed after the drawing data is received, and a label issuing speed can be improved.

An eighth aspect of the present invention provides a program executable by a computer in a printer, the printer performing, based on print data, printing on a label continuous body provided with a plurality of labels each having an RFID inlay, the program causes the computer to execute: a procedure of generating RFID data and drawing data from the print data; a procedure of writing the RFID data to the RFID inlay in parallel with receiving the generated drawing data; and a procedure of printing the received drawing data on the label.

According to the eighth aspect of the present invention, since the RFID data is written to the RFID inlay in parallel with receiving the generated drawing data, the writing of the RFID data is performed without waiting for a process required for receiving the drawing data. Therefore, since the RFID data is written to an RFID inlay of a leading label when a print start command is received, a timing at which the printing is completed is earlier as compared with a case in which the writing of the RFID data is performed after the drawing data is received, and a label issuing speed can be improved.

Hereinafter, a printer 1 according to an embodiment of the present invention will be described with reference to the accompanying drawings.

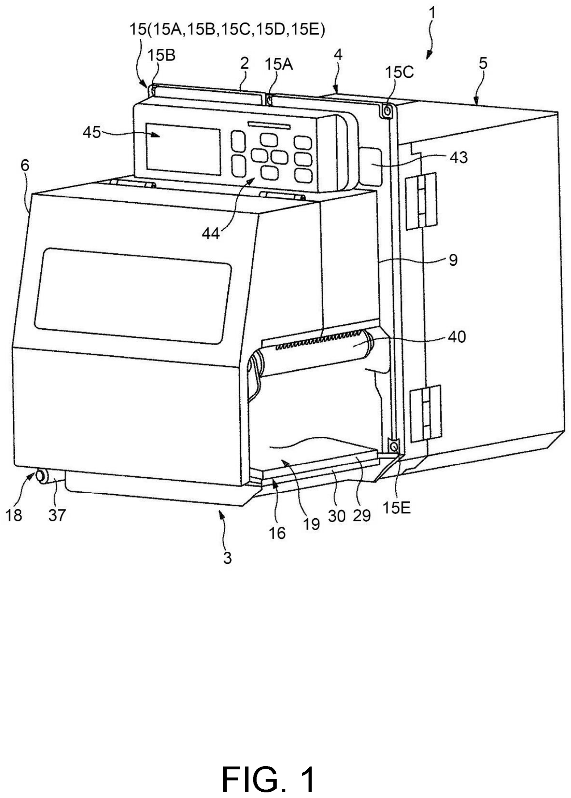

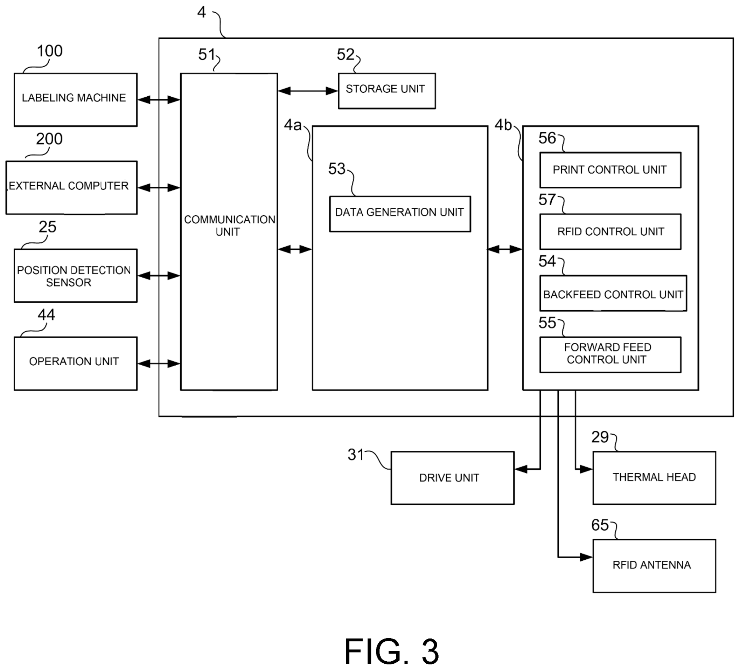

FIG. 1 is a perspective view of the printer 1. As illustrated in FIG. 1, the printer 1 includes a central main body unit 2, a print unit 3, a drive unit 31 (see FIG. 3) that drives the print unit 3, a control unit 4, and a power supply unit 5.

The print unit 3 is located on one side surface of the central main body unit 2 (a front surface of the printer 1). The drive unit 31, the control unit 4, and the power supply unit 5 are located on the other (opposite) side surface of the central main body unit 2 (a back surface of the printer 1).

The central main body unit 2 is a rectangular plate-shaped unit having a predetermined mechanical strength. The central main body unit 2 is located at a central portion of the printer 1, and the print unit 3, the drive unit 31, the control unit 4, and the power supply unit 5 are assembled into the central main body unit 2.

A power supply switch 43, an operation unit 44 including various operation keys, a display 45, and the like are provided above a support case 9 on the central main body unit 2.

The central main body unit 2 is provided with a mounting portion 15 for mounting the printer 1 to a labeling machine 100 (see FIG. 3).

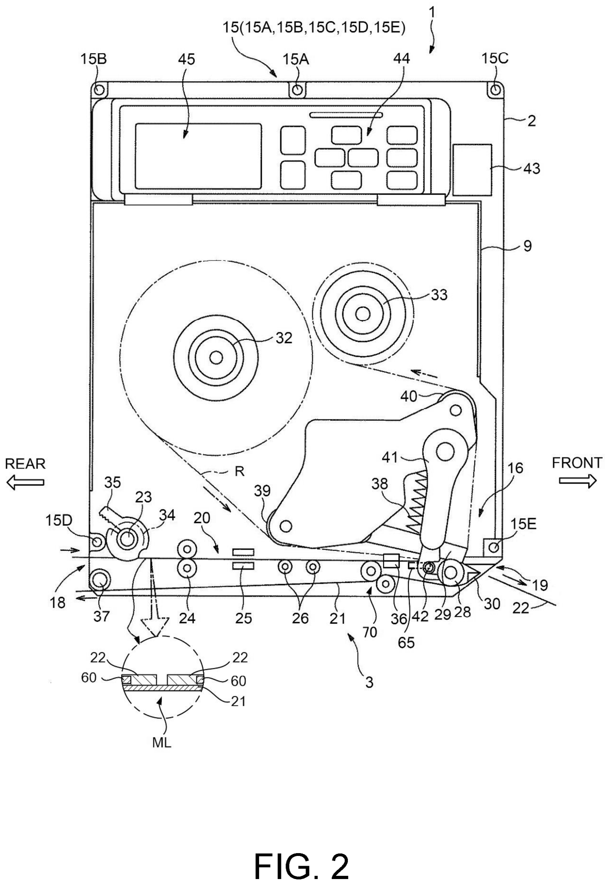

Any configuration can be selected for the mounting portion 15, and in the present embodiment, the mounting portion 15 is provided at a peripheral portion of the central main body unit 2. Specifically, the mounting portion 15 according to the present embodiment includes five mounting holes (an upper central mounting hole 15A, an upper left end mounting hole 15B, an upper right end mounting hole 15C, a lower left end mounting hole 15D (see FIG. 2), and a lower right end mounting hole 15E) formed in the peripheral portion of the central main body unit 2.

The drive unit 31 includes, for example, a plurality of stepping motors, and rotation operations (rotation directions, the number of steps, and the like) of the plurality of stepping motors are controlled by the control unit 4.

The power supply unit 5 receives power from an outside through a power cable or the like and supplies the power to the control unit 4, the drive unit 31, and the print unit 3.

FIG. 2 is a front view of the printer 1 from which a print unit cover 6 (see FIG. 1) is removed.

As illustrated in FIG. 2, the print unit 3 includes a print portion 16 that performs printing on a plurality of labels 22 included in a label continuous body ML.

The print unit 3 can print predetermined information on the label 22 in a feed path 20 from an introduction port 18 to a discharge port 19 of the label continuous body ML.

As illustrated in an enlarged cross-sectional view in FIG. 2, the label continuous body ML includes a strip-shaped liner sheet 21 as a continuous paper, and the plurality of labels 22 temporarily attached to a front surface side of the liner sheet 21. The label 22 is configured as an RFID medium in which an RFID inlay 60, including an IC chip and an antenna compliant with a radio frequency identification (RFID) specification, is incorporated. A position detection mark (not illustrated) is printed in advance on a back surface side of the liner sheet 21.

The label continuous body ML may be, for example, a roll label or a fanfold label in which perforations are formed at predetermined intervals in the liner sheet 21.

The print portion 16 includes a width regulating shaft 23, a pair of upper and lower auxiliary feed rollers 24, a position detection sensor 25, two guide rollers 26, a feed roller mechanism 70, a second width regulating fixed wall portion 36, an RFID antenna 65, a platen roller 28, a thermal head 29, and a peeling plate 30 in this order from an upstream side of the feed path 20 (a rear side of the printer 1).

Further, the print portion 16 includes a ribbon supply shaft 32 that supplies an unused thermal transfer ink ribbon R between the platen roller 28 and the thermal head 29, and a ribbon roll-up shaft 33 that rolls up a used thermal transfer ink ribbon R.

The width regulating shaft 23 is provided with a first width regulating fixed wall portion 34 and a width regulating movable ring 35. Positions of both left and right edge portions of the label continuous body ML are regulated by the first width regulating fixed wall portion 34, the width regulating movable ring 35, and the second width regulating fixed wall portion 36 provided on an upstream side of the platen roller 28. Accordingly, a feed posture of the label continuous body ML is appropriately regulated along the feed path 20.

The auxiliary feed rollers 24 are driven in synchronization with the platen roller 28 and assist the platen roller 28 and the thermal head 29 in feeding the label continuous body ML in forward and backward directions. Forward feed (forward direction feed) is fed to a downstream side (a front side of the printer 1), and backfeed (backward feed) is fed to the upstream side (the rear side of the printer 1).

The position detection sensor 25 can detect a relative positional relation between the label continuous body ML (label 22), the platen roller 28, and the thermal head 29 by detecting the position detection mark on the liner sheet 21.

The feed roller mechanism 70 feeds the liner sheet 21 turned by the peeling plate 30 to the rear side of the printer 1 while nipping the liner sheet 21. The liner sheet 21 is discharged to an outside of the printer 1 via a liner sheet guide roller 37.

The RFID antenna 65 writes RFID data by performing wireless communication with the RFID inlay 60 under a control of the RFID control unit 57. The RFID antenna 65 can also read RFID data from the RFID inlay 60.

The platen roller 28 nips the label continuous body ML and the thermal transfer ink ribbon R between the platen roller 28 and the thermal head 29 at a predetermined print pressure by a pressing spring 38. In this state, heating elements of the thermal head 29 are caused to generate heat, and the platen roller 28 is rotationally driven, whereby printing on the label 22 is performed. In a case in which the label 22 is a thermosensitive medium that performs self-coloring by heat, the thermal transfer ink ribbon R is unnecessary.

The thermal transfer ink ribbon R is supplied between the platen roller 28 and the thermal head 29 from the ribbon supply shaft 32 via a first ribbon guide roller 39, and is rolled up by the ribbon roll-up shaft 33 via a second ribbon guide roller 40.

By pivoting an opening and closing lever 41 in a clockwise direction, the platen roller 28 and the thermal head 29 can be separated from each other. Accordingly, the label continuous body ML and the thermal transfer ink ribbon R can be loaded between the platen roller 28 and the thermal head 29.

When the opening and closing lever 41 is pivoted in a counterclockwise direction to engage a distal end portion of the opening and closing lever 41 with a lever engagement pin 42 mounted to a frame, the platen roller 28 and the thermal head 29 are in a printing posture illustrated in FIG. 2.

The peeling plate 30 turns only the liner sheet 21 of the label continuous body ML at a distal end portion thereof. Accordingly, the label 22 is peeled off from the liner sheet 21 and discharged (issued) from the discharge port 19. The label 22 peeled from the liner sheet 21 is transferred to the labeling machine 100. The labeling machine 100 attaches the label 22 received from the printer 1 to an adherend.

The control unit 4 is implemented by a microcomputer including a central processing unit (CPU), a read-only memory (ROM), a random access memory (RAM), and an input/output interface (an I/O interface). The control unit 4 executes various processes by the CPU reading and executing programs stored in the ROM. The control unit 4 may also be implemented by a plurality of microcomputers.

Hereinafter, the control unit 4 will be described in detail with reference to FIG. 3. FIG. 3 is a block diagram illustrating a part of functions of the control unit 4, and each block does not necessarily mean a physical configuration.

As illustrated in FIG. 3, the control unit 4 is communicably connected to the labeling machine 100 and an external computer 200 in a wired or wireless manner. Further, the control unit 4 receives signals from various sensors including the position detection sensor 25, the operation unit 44, and the like. The external computer 200 is also communicably connected to the labeling machine 100.

The control unit 4 controls the drive unit 31 and the thermal head 29 based on print data acquired from the external computer 200, whereby the printing on the label 22 is performed.

The control unit 4 includes a communication unit 51, a storage unit 52, a data generation unit 53, a backfeed control unit 54, a forward feed control unit 55, a print control unit 56, and an RFID control unit 57.

In the present embodiment, the data generation unit 53 is configured to be executable in a first processor 4a. The backfeed control unit 54, the forward feed control unit 55, the print control unit 56, and the RFID control unit 57 are configured to be executable in a second processor 4b. The first processor 4a and the second processor 4b are each implemented by a program to be executed by a physical CPU included in the control unit 4. The first processor 4a and the second processor 4b may be virtual processors implemented by programs to be executed by physical CPUs included in the control unit 4.

The data generation unit 53, the backfeed control unit 54, the forward feed control unit 55, the print control unit 56, and the RFID control unit 57 may be implemented by a single physical or virtual processor. Further, each unit may be implemented by a different physical or virtual processor from the others.

The communication unit 51 transmits and receives various kinds of information to and from the labeling machine 100 and the external computer 200. Further, the communication unit 51 receives signals from various sensors including the position detection sensor 25, the operation unit 44, and the like.

The storage unit 52 stores, for example, print data acquired from the external computer 200, a state of the printer 1, and the like. The labeling machine 100 and the external computer 200 can store information in the storage unit 52 via the communication unit 51.

The data generation unit 53 analyzes the print data acquired from the external computer 200 via the storage unit 52 and generates control data, drawing data, and RFID data. Then, the data generation unit 53 transfers the control data, the drawing data, and the RFID data to the print control unit 56.

The control data includes a value indicating the number of steps of a pulse signal to be supplied to the stepping motor of the drive unit 31 during the printing.

The drawing data includes a value (the number of dots) indicating a print position for selectively energizing the heating elements of the thermal head 29 for each line during the printing. The drawing data has a data amount greater than that of the control data.

The RFID data includes data to be written to the RFID inlay 60 during the printing. Specifically, the RFID data includes text data or numeric data of drawing data to be printed on the label 22.

After the printed label 22 is delivered to the labeling machine 100, the backfeed control unit 54 backfeeds the label continuous body ML and moves the leading label 22 of the label continuous body ML to a print start position. An amount of the backfeed is set based on a detection result of the position detection sensor 25.

The leading label 22 is an unprinted label 22 located on an upstream side by one than the printed label 22 peeled off from the liner sheet 21 and transferred to the labeling machine 100. That is, a position of the leading label 22 when the printed label 22 is transferred to the labeling machine 100 (hereinafter referred to as a "label issuing position") is a position of the leading label 22 before the backfeed control unit 54 starts the backfeed (hereinafter referred to as a "predetermined standby position").

The forward feed control unit 55 feeds the label continuous body ML at a speed suitable for printing when the printing on the label 22 is performed.

When an error stop request or a label feed request is generated after the backfeed control unit 54 completes the backfeed, the forward feed control unit 55 forward feeds the label continuous body ML and further moves, to the label issuing position, the leading label 22 moved to the print start position. The error stop request is generated when an error occurs in the printer 1. The error stop request may be generated when an error occurs in the labeling machine 100 or when an error occurs in the external computer 200. The label feed request is generated, for example, by a user inputting a command via the operation unit 44.

The print control unit 56 acquires the control data and the drawing data from the data generation unit 53. Then, when a print start command (a print request) is acquired thereafter, a print process of printing on the label 22 at the print start position and moving the label 22 to the label issuing position is executed.

Specifically, the print control unit 56 controls energization of the plurality of stepping motors of the drive unit 31 based on the control data, and controls the energization of the thermal head 29 based on the drawing data, thereby performing printing on the label 22 and feeding the label 22 to the label issuing position.

The print start command is supplied from the external computer 200 to the control unit 4. That is, in the present embodiment, the print control unit 56 acquires the print start command from the external computer 200 via the communication unit 51 and the first processor 4a.

If the external computer 200 determines that the labeling machine 100 is in the predetermined standby state and the printer 1 is in a printable state, the external computer 200 transmits the print start command to the control unit 4.

When the printer 1 completes the print process, the external computer 200 supplies new print data to the control unit 4.

The RFID control unit 57 acquires the RFID data from the data generation unit 53. Then, the RFID data is written to the RFID inlay 60 of the label 22 at the print start position via the RFID antenna 65.

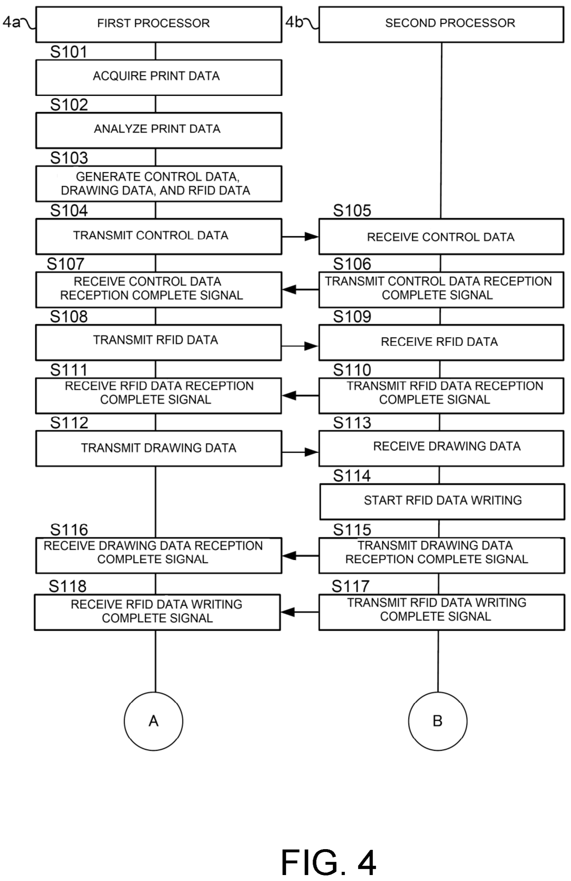

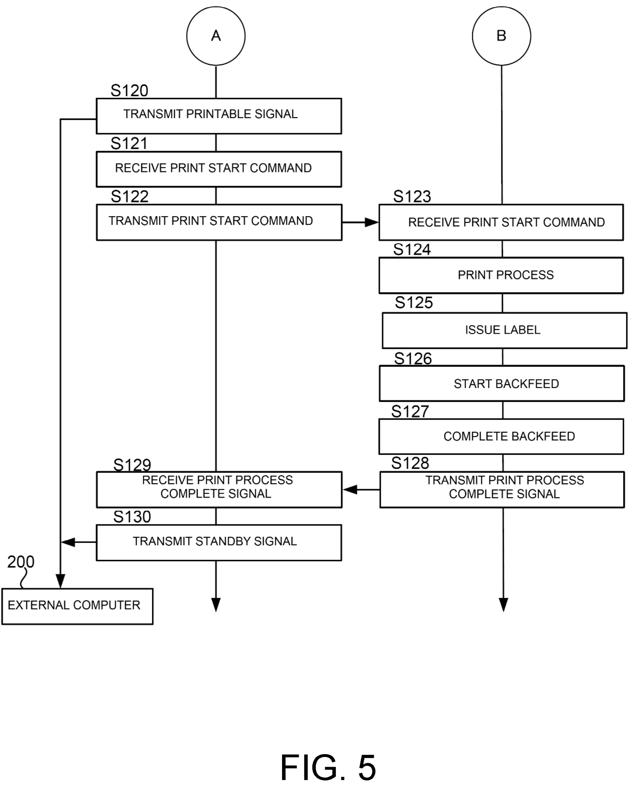

Next, a label issuing process executed by the control unit 4 will be described with reference to FIGS. 4 and 5. FIGS. 4 and 5 are flowcharts of the label issuing process, in which a process of the first processor 4a and a process of the second processor 4b are illustrated in parallel in chronological order.

In step S101, the first processor 4a acquires print data. The first processor 4a refers to the storage unit 52 at predetermined intervals (for example, every several tens of milliseconds to every several hundreds of milliseconds), and automatically acquires the print data when the external computer 200 stores the print data in the storage unit 52.

In step S102, the first processor 4a analyzes the acquired print data.

In step S103, the first processor 4a generates control data, drawing data, and RFID data based on an analysis result of the print data.

In step S104, the first processor 4a transmits the control data to the second processor 4b.

In step S105, the second processor 4b receives the control data transmitted by the first processor 4a.

In step S106, the second processor 4b transmits, to the first processor 4a, a control data reception complete signal indicating that reception of the control data is completed.

In step S107, the first processor 4a receives the control data reception complete signal transmitted by the second processor 4b.

In step S108, the first processor 4a transmits the RFID data to the second processor 4b.

In step S109, the second processor 4b receives the RFID data transmitted by the first processor 4a.

In step S110, the second processor 4b transmits, to the first processor 4a, an RFID data reception complete signal indicating that reception of the RFID data is completed.

In step S111, the first processor 4a receives the RFID data reception complete signal transmitted by the second processor 4b.

In step S112, the first processor 4a transmits the drawing data to the second processor 4b.

In step S113, the second processor 4b receives the drawing data transmitted by the first processor 4a.

In step S114, the second processor 4b starts writing the RFID data to the RFID inlay 60 of the label 22 in parallel with receiving the drawing data transmitted by the first processor 4a. The writing of the RFID data in step S114 may be started before transmission of the drawing data in step S112.

In step S115, the second processor 4b transmits, to the first processor 4a, a drawing data reception complete signal indicating that reception of the drawing data is completed.

In step S116, the first processor 4a receives the drawing data reception complete signal transmitted by the second processor 4b.

In step S117, the second processor 4b transmits, to the first processor 4a, an RFID data writing complete signal indicating that the writing of the RFID data is completed.

In step S118, the first processor 4a receives the RFID data writing complete signal transmitted by the second processor 4b.

A process time between the steps S113 and S115 may be different from a process time between the steps S114 and S117 depending on sizes of the drawing data and the RFID data. Therefore, a timing at which the reception of the drawing data is completed is not necessarily earlier than a timing at which the writing of the RFID data is completed.

In step S120, in response to the second processor 4b completing the reception of the drawing data and completing the writing of the RFID data, the first processor 4a transmits, to the external computer 200, a printable signal indicating that the printer 1 is in a printable state.

In step S121, the first processor 4a receives the print start command transmitted by the external computer 200.

In step S122, the first processor 4a transmits the print start command to the second processor 4b.

In step S123, the second processor 4b receives the print start command transmitted by the first processor 4a.

In step S124, the second processor 4b executes a print process.

In step S125, the label 22 on which the print process has been completed is issued from the discharge port 19 of the printer 1 and transferred to the labeling machine 100.

In step S126, the second processor 4b starts backfeed of the label continuous body ML.

In step S127, the second processor 4b completes the backfeed of the label continuous body ML when the label 22 at a leading position reaches the print start position.

In step S128, the second processor 4b transmits, to the first processor 4a, a print process complete signal indicating that the print process is completed.

In step S129, the first processor 4a receives the print process complete signal transmitted by the second processor 4b.

In step S130, the first processor 4a transmits, to the external computer 200, a standby signal indicating that the printer 1 is in a standby state.

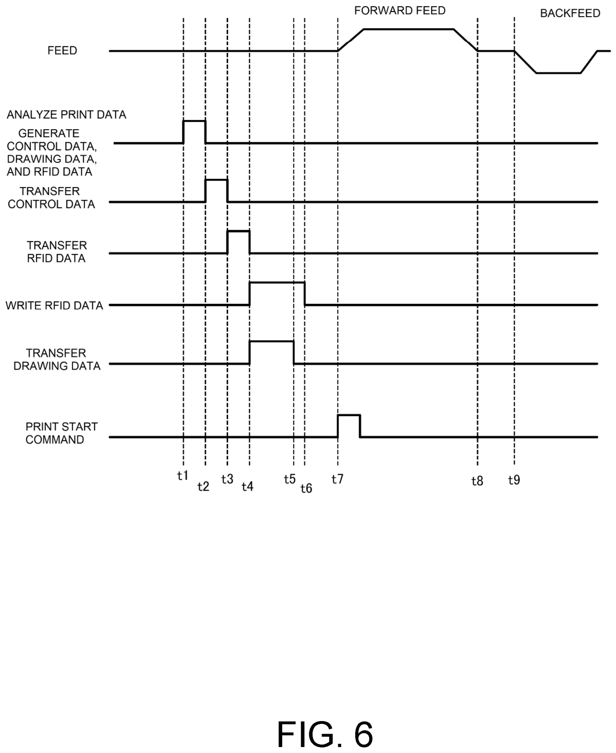

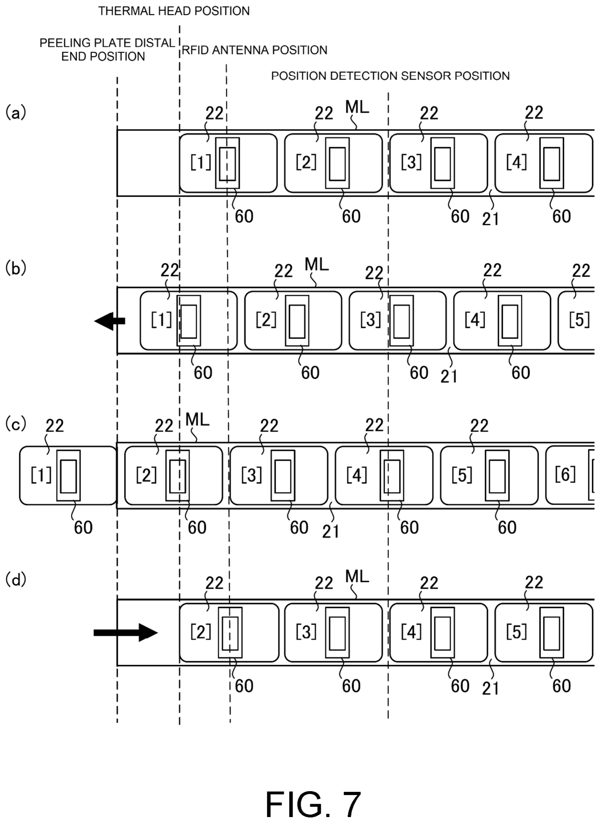

Next, with reference to FIGS. 6 and 7, a state in which the label issuing process is executed will be described. FIG. 6 is a time chart of the label issuing process. FIG. 7 is a diagram illustrating an operation of the printer 1 in the label issuing process. In FIG. 7, serial numbers ([1], [2] ...) are attached to the labels 22 to facilitate understanding of a change in the position of each label 22 along with the feed of the label continuous body ML.

Before a time point t1 in FIG. 6, as illustrated in a state (a) in FIG. 7, the printer 1 is in the standby state, and the leading label 22 [1] of the label continuous body ML is at the predetermined standby position. In this state, the RFID inlay 60 of the leading label 22 [1] is at a position of the RFID antenna 65 of the printer 1.

At the time point t1, the first processor 4a acquires print data. The first processor 4a analyzes the print data and generates control data, drawing data, and RFID data from the time point t1 to a time point t2.

At the time point t2, transfer of the control data from the first processor 4a to the second processor 4b is started.

At a time point t3, the transfer of the control data from the first processor 4a to the second processor 4b is completed, and transfer of the RFID data from the first processor 4a to the second processor 4b is started.

At a time point t4, the transfer of the RFID data from the first processor 4a to the second processor 4b is completed. Thereafter, transfer of the drawing data from the first processor 4a to the second processor 4b is started. At this time, in parallel with the transfer of the drawing data, writing of the RFID data to the RFID inlay 60 of the label 22 by the second processor 4b is started.

The timings of completing the transfer of the RFID data, starting the transfer of the drawing data, and starting the writing of the RFID data may vary depending on operation states of the first processor 4a and the second processor 4b, and do not necessarily occur simultaneously at the time point t4. The writing of the RFID data may be started at least during the transfer of drawing data.

At a time point t5, the transfer of the drawing data from the first processor 4a to the second processor 4b is completed.

At a time point t6, the writing of the RFID data by the second processor 4b is completed.

At a time point t7, the second processor 4b acquires a print start command. When the print start command is acquired, the printer 1 starts a print process (a forward feed). Accordingly, as illustrated in a state (b) of FIG. 7, printing is performed while the label 22 [1] is fed forward.

In the present embodiment, as illustrated in FIG. 6, the print process is started when a signal of the print start command is turned ON. However, the print process may be started when the signal of the print start command is turned OFF.

At a time point t8, the print process is completed. Accordingly, as illustrated in a state (c) in FIG. 7, the printed label 22 [1] is at the label issuing position. The issued label 22 [1] is transferred to the labeling machine 100 and the label 22 is attached.

At a time point t9, backfeed is performed. As a result of performing the backfeed, as illustrated in a state (d) in FIG. 7, the leading label 22 [2] of the label continuous body ML moves to the predetermined standby position.

As described above, in the printer 1, the RFID control unit 57 writes the drawing data to the RFID inlay 60 in parallel with the transmission of the drawing data from the data generation unit 53 to the print control unit 56. That is, writing to the RFID inlay 60 is performed without waiting for the end of the transmission of the drawing data. Therefore, since the RFID data is written to the RFID inlay 60 when a print start command is received, a timing at which the printing is completed is earlier as compared with a case in which the writing of the RFID data is performed after the drawing data is received, and an issuing speed of the label 22 can be improved.

In FIGS. 4, 5, and 6, it is described that the control data, the RFID data, and the drawing data are transferred from the data generation unit 53 to the print control unit 56 and the RFID control unit 57 in this order. However, the transfer is not necessarily performed in this order. By executing the writing to the RFID inlay 60 based on the received RFID data when the drawing data is transferred, the above effect can be achieved.

Main functions and effects of the printer 1 configured as described above will be collectively described.

The printer 1 that performs, based on the print data, printing on the label continuous body ML provided with the plurality of labels 22 each having an RFID inlay 60, the printer 1 including: the data generation unit 53 that generates the RFID data and the drawing data from the print data; the RFID control unit 57 that receives the RFID data generated by the data generation unit 53 and writes the received RFID data to the RFID inlay 60; and the print control unit 56 that receives the drawing data generated by the data generation unit 53 and prints the received drawing data on the label 22, in which the RFID control unit 57 writes the RFID data to the RFID inlay 60 in parallel with the print control unit 56 receiving the drawing data transmitted from the data generation unit 53.

According to this, since the RFID control unit 57 writes the RFID data to the RFID inlay 60 in parallel with the print control unit 56 receiving the drawing data, the writing of the RFID data is performed without waiting for a process for receiving the drawing data in the print control unit 56. Therefore, since the RFID data is written to the RFID inlay 60 of the leading label 22 when a print start command is received, a timing at which the printing is completed is earlier as compared with a case in which the writing of the RFID data is performed after the drawing data is received, and the issuing speed of the label 22 can be improved.

An example is described in which the data generation unit 53 is implemented by the first processor 4a and the print control unit 56 and the RFID control unit 57 are implemented by the second processor 4b. However, even if these units are implemented by a single processor, there is an effect of improving the issuing speed by generating a timing at which a writing process of the RFID is performed at least at the same time as receiving the drawing data.

The print control unit 56 of the printer 1 performs printing on the label 22 after the RFID control unit 57 ends the writing to the RFID inlay 60.

According to this, since the print control unit 56 quickly performs printing on the label 22 by acquiring the print start command after the writing to the RFID inlay 60 is ended, the issuing speed of the label 22 can be improved.

The data generation unit 53 of the printer 1 further generates control data from the print data, and the RFID control unit 57 writes the RFID data to the RFID inlay 60 after the print control unit 56 receives the control data transmitted from the data generation unit 53.

According to this, when the print control unit 56 prepares for printing based on the received control data, the RFID control unit 57 writes the RFID data to the RFID inlay 60, and thus the issuing speed of the label 22 can be improved.

The RFID control unit 57 of the printer 1 performs writing to the RFID inlay 60 when the leading label 22 of the label continuous body ML is at the printing start position.

According to this, since the RFID data can be written to the RFID inlay 60 when the leading label 22 is at the print start position, there is no need to perform forward feed and backfeed to write the RFID data.

The printer 1 includes the first processor 4a and the second processor 4b that are communicably connected to each other. The first processor 4a constitutes the data generation unit 53, and the second processor 4b constitutes the RFID control unit 57 and the print control unit 56.

According to this, in the configuration in which the data generation unit 53, the RFID control unit 57, and the print control unit 56 are implemented by the first processor 4a and second processor 4b that are different from each other, the issuing speed of the label 22 can be improved.

More specifically, the transfer of the drawing data from the data generation unit 53 to the print control unit 56 requires a longer time than a case in which the data generation unit 53 and the print control unit 56 are implemented by a single processor. In such a configuration, when the RFID control unit 57 performs writing of the RFID data after the transfer of the drawing data from the data generation unit 53 to the print control unit 56 is completed, the slower a transfer speed of the data from the data generation unit 53 to the print control unit 56, the greater a ratio of a data transfer time to a time required for issuing the label 22. Therefore, by starting the writing of the RFID data without waiting for the completion of acquisition of the drawing data, the time required for issuing the label 22 can be shortened by a time required for transferring the drawing data. That is, the slower the data transfer speed from the data generation unit 53 to the print control unit 56, the greater a ratio of the time required for issuing the label 22 that can be shortened. Therefore, it can be said that in the case in which the first processor 4a constitutes the data generation unit 53 and the second processor 4b constitutes the print control unit 56, the effect of improving the issuing speed of the label 22 is greater than that in the case in which the data generation unit 53 and the print control unit 56 are implemented by a single processor.

The printer 1 further includes the backfeed control unit 54 that backfeeds the label continuous body ML and moves the leading label 22 to the print start position. The backfeed control unit 54 performs the backfeed after the printed label 22 is issued.

According to this, by performing the backfeed after the printing is completed, preparation for printing on the next label 22 and writing to the RFID inlay 60 can be immediately performed.

Although the embodiment of the present invention has been described above, the above embodiment merely exemplifies one application example of the present invention, and does not intend to limit the technical scope of the present invention to the specific configuration of the above embodiment.

For example, various programs of the printer 1 may be stored in a non-transitory recording medium such as a CD-ROM.

The present application claims priority under Japanese Patent Application No. 2022-208605 filed to the Japan Patent Office on December 26, 2022, and an entire content of this application are incorporated herein by reference.

## Claims

1. A printer that performs, based on print data, printing on a label continuous body provided with a plurality of labels each having an RFID inlay, the printer comprising:
a data generation unit configured to generate RFID data and drawing data from the print data;
an RFID control unit configured to receive the RFID data generated by the data generation unit and write the received RFID data to the RFID inlay; and
a print control unit configured to receive the drawing data generated by the data generation unit and print the received drawing data on the label, wherein
the RFID control unit writes the RFID data to the RFID inlay in parallel with the print control unit receiving the drawing data transmitted from the data generation unit.

2. The printer according to claim 1, wherein
the print control unit performs printing on the label after the RFID control unit ends writing to the RFID inlay.

3. The printer according to claim 1, wherein
the data generation unit further generates control data from the print data, and
the RFID control unit writes the RFID data to the RFID inlay after the print control unit receives the control data transmitted from the data generation unit.

4. The printer according to claim 1, wherein
the RFID control unit performs writing to the RFID inlay when a leading label of the label continuous body is at a print start position.

5. The printer according to claim 1, further comprising:
a first processor and a second processor communicably connected to each other, wherein
the first processor constitutes the data generation unit, and
the second processor constitutes the RFID control unit and the print control unit.

6. The printer according to claim 1, further comprising:
a backfeed control unit configured to backfeed the label continuous body and move a leading label to a print start position, wherein
the backfeed control unit performs backfeed after the printed label is issued.

7. A control method to be executed by a computer in a printer, the printer performing, based on print data, printing on a label continuous body provided with a plurality of labels each having an RFID inlay, the control method comprising:
a step of generating RFID data and drawing data from the print data;
a step of writing the RFID data to the RFID inlay in parallel with receiving the generated drawing data; and
a step of printing the received drawing data on the label.

8. A program executable by a computer in a printer, the printer performing, based on print data, printing on a label continuous body provided with a plurality of labels each having an RFID inlay, the program causes the computer to execute:
a procedure of generating RFID data and drawing data from the print data;
a procedure of writing the RFID data to the RFID inlay in parallel with receiving the generated drawing data; and
a procedure of printing the received drawing data on the label.
